# EUROPÄISCHE PATENTSCHRIFT

(11) **EP 2 738 538 B1**
(45) Veröffentlichungstag und Bekanntmachung des Hinweises auf die Patenterteilung: **10.02.2016**
(21) Anmeldenummer: 13004146.0
(22) Anmeldetag: 22.08.2013
(51) Int. Cl.: G01M 17/04

(54) **Verfahren und Kraftfahrzeug zur Erfassung von an einem Kraftfahrzeug auftretenden Beanspruchungen**
Method and motor vehicle for recording of stresses on a motor vehicle
Procédé et véhicule automobile pour détecter des sollicitations qui s'exercent sur un véhicule automobile

(30) Priorität: 01.12.2012 DE 102012023544
(43) Veröffentlichungstag der Anmeldung: 04.06.2014
(73) Patentinhaber: MAN Truck & Bus AG, 80995 München (DE)
(72) Erfinder: Drimml, Peter, 85221 Dachau (DE); Hamberger, Josef, 85250 Altomünster (DE); Dörner, Karlheinz, 85757 Karlsfeld (DE)

(56) Entgegenhaltungen:
- EP-A1- 0 134 837
- EP-A1- 1 584 909
- DE-A1- 2 938 639
- DE-A1- 10 258 265
- US-A1- 2009 099 719

## Beschreibung

Die Erfindung betrifft ein Verfahren zur Erfassung von an einem Kraftfahrzeug auftretenden Beanspruchungen nach dem Oberbegriff des Anspruchs 1 sowie ein Kraftfahrzeug zur Durchführung des Verfahrens nach dem Oberbegriff des Anspruchs 12.

Bei einem Kraftfahrzeug werden die gefahrenen Wegstrecken und/oder auch Betriebsstunden erfasst, um beispielsweise bestimmen zu können, wann ein Fahrzeugservice durchgeführt werden muss. Die in einem Speicher abgelegten gefahrenen Kilometer und/oder die Betriebsstunden des Kraftfahrzeugs können somit als Maßangaben für eine über einen längeren Zeitraum erfolgte Beanspruchung des Kraftfahrzeugs ausgewertet werden. Dabei kann aber nicht berücksichtigt werden, ob das Kraftfahrzeug durch starke Beladung und/oder durch Befahren schlechter Wegstrecken besonders hohen Beanspruchungen ausgesetzt war.

Gerade bei Nutzfahrzeugen besteht häufig die Forderung, dass aus Kostengründen möglichst schnell Fahrziele erreicht werden, wobei dann jeder Fahrer selbst entscheiden muss, mit welcher Fahrzeuggeschwindigkeit er schleckte Wegstrecken befährt. Ein zu schnelles Befahren von schlechten Wegstrecken reduziert die Lebensdauer der einzelnen Fahrzeugkomponenten im Fahrwerkbereich erheblich. Es kann dann zu Ausfällen von unterschiedlichen am Fahrgestell angebauten Komponenten kommen, wobei es dann bei einer Schadensanalyse sehr hilfreich wäre, wenn geeignete Daten aus einem Datenspeicher ausgelesen werden könnten, die eine Aussage darüber beinhalten, wie stark das Kraftfahrzeug auf schlechten Wegstrecken beansprucht worden ist.

Aus der E 38 40 112 C1 ist eine Vorrichtung zur Anzeige des Beladungszustandes von Nutzfahrzeugen bekannt, bei der die durch die Beladung des Nutzfahrzeugs sich ergebende Einfederung gemessen wird. Hierzu wird der Abstand zwischen dem Fahrzeugrahmen und der Achse gemessen und zur Anzeige gebracht. Dadurch erhält man ein Maß für eine statische Belastung des Fahrwerks, die sich durch die jeweilige Beladung des Nutzfahrzeugs ergibt.

Auch aus der DE 40 00 073 A1 ist eine Überlastanzeige für Fahrzeuge bekannt, die an Stoßdämpfern angeordnete Sensoren verwendet. Die Sensoren messen den jeweiligen Federweg im Bereich der Stoßdämpfer, der sich aufgrund der Beladung des Fahrzeugs ergibt. Mit dieser Überlastanzeige ist eine statische Belastung, die sich durch die Ladung ergibt, im Bereich der Fahrzeugachsen messbar.

Die weitere US 2009/0099719 A1 betrifft ein Verfahren zur Bestimmung und Vorhersage eines Verschleißens einer Radaufhängung, beispielsweise von Fahrzeugfedern der Radaufhängung. Hierzu werden der Zustand der Fahrbahn und die aktuelle Fahrzeuggeschwindigkeit erfasst und mit vorgegebenen Werten verglichen. In einer Ausgestaltung erfolgt die Erfassung des Fahrbahnzustands mittels Sensoren, die dem Aufhängungssystem des Fahrzeugs zugeordnet sind.

Aus der DE 102 58 265 A1 geht ein Verfahren zur Überwachung von einem oder mehreren Feder-Dämpfer-Einheiten eines Kraftfahrzeugs hervor, bei dem während der Fahrt das Schwingungsverhalten der Feder-Dämpfer-Einheit sensorisch erfasst wird. Zur Erkennung eines Defekts bzw. einer Fehlfunktion der Feder-Dämpfer-Einheit wird das Abklingverhalten der Feder-Dämpfer-Einheit beobachtet.

Die EP 1 584 909 A1 beschreibt ein Verfahren zur Erfassung von Beanspruchungen eines Fahrzeugfahrwerks, bei dem eine Änderung einer auf das Fahrzeugfahrwerk wirkenden Kraft, eine Änderung eines an dem Fahrzeugfahrwerk angreifenden Moments und/oder eine Lageänderung zumindest eines Elements des Fahrzeugfahrwerks detektiert wird. Aus dieser wenigstens einen Änderung wird ein Beanspruchungswert für das Fahrzeugfahrwerk ermittelt.

In der EP 0 134 837 A1 ist eine Vorrichtung zur Messung eines Oberflächenprofils einer Fahrbahn offenbart, bei der das Oberflächenprofil unabhängig von der Geschwindigkeit eines die Vorrichtung aufweisenden Fahrzeugs und unabhängig von Änderungen der Geschwindigkeit des Fahrzeugs gemessen werden kann.

Der Erfindung liegt die Aufgabe zugrunde, ein Verfahren zur Erfassung von an einem Kraftfahrzeug auftretenden dynamischen Beanspruchungen, wie diese beim Befahren schlechter Wegstrecken auftreten, anzugeben.

Die Lösung dieser Aufgabe gelingt mit den im Anspruch 1 angegebenen Merkmalen. Besonders vorteilhafte Weiterbildungen des erfindungsgemäßen Verfahrens sind Gegenstand der Unteransprüche 2 bis 11.

Gemäß Anspruch 1 werden im Fahrbetrieb innerhalb von definierten Messzeiträumen auftretende dynamische Federwegsänderungen an der Fahrzeugfederung erfasst, wobei zeitlich zugeordnete Fahrzeuggeschwindigkeitswerte erfasst werden, und wobei die zeitgleich auftretenden Federwegsänderungen und Fahrzeuggeschwindigkeitswerte zur Bestimmung von Beanspruchungswerten herangezogen werden. Erfindungsgemäß werden als Federwegsänderungen die Differenz zeitlich benachbarter Maximalfederwege geteilt durch die Zeitdifferenz der zugehörigen Auftrittszeitpunkte ermittelt. Zudem wird eine Auftrittshäufigkeit von auftretenden Maximalfederwegen ermittelt und den festgestellten Federwegsänderungen in einem Datenspeicher zugeordnet.

Mittels derart ermittelter Federwegsänderungen kann die Geschwindigkeit der Federwegsänderungen berücksichtigt werden. Damit erhält man ein Maß für die Auftrittshäufigkeit der Maximalfederwege, so dass eine Aussage darüber gemacht werden kann, ob sich das Fahrzeug gerade auf einer Wegstrecke mit vielen Straßenschäden oder auf einer Wegstrecke mit wenig Straßenschäden befindet. Durch die Zuordnung der Auftrittshäufigkeit von Maximalfederwegen zu den festgestellten Federwegsänderungen in einem Datenspeicher kann sowohl die Auftrittshäufigkeit als auch die Höhe der Belastungen erfasst werden. Die abgespeicherten Daten können dann in getrennten Speicherbereichen festgehalten werden, die einzeln lesbar und/oder löschbar und/oder überschreibbar sind. Bevorzugt kann dabei eine Abspeicherung von Daten sowohl in einem Kurzzeit-Datenspeicher als auch in einem Langzeit-Datenspeicher erfolgen. Der Langzeit-Datenspeicher kann dann einen Speicherbereich darstellen, der über die gesamte Lebensdauer des Kraftfahrzeugs sämtliche jemals erfassten Belastungsdaten bzw. Beanspruchungswerte enthält.

Weiter kann die Abspeicherung dynamischer Federwegsänderungen auf der Basis von auftretenden Extremwerten innerhalb eines festgelegten Messzeitraums erfolgen, jedoch kann beispielsweise auch der zeitliche Abstand von auftretenden Extremwerten zur Bestimmung der dynamischen Beanspruchung und damit als definierter Messzeitraum herangezogen werden kann. Die auf diese Weise festgestellten Beanspruchungswerte können fortlaufend überwacht werden, um bei einer auftretenden Überbelastung eine entsprechende Signalisierung auszulösen, die dem Fahrer anzeigt, dass zur Vermeidung von Überbeanspruchungen eine Reduzierung der Fahrzeuggeschwindigkeit vorgenommen werden sollte. Die ermittelten Beanspruchungswerte können außerdem in einem Datenspeicher so abgelegt werden, dass im Servicefall diese Beanspruchungswerte ausgelesen werden können, um eine Aussage über die zurückliegenden Beanspruchungen, denen das Fahrzeug ausgesetzt war, machen zu können.

Eine einfache Art der Auswertung der ermittelten Beanspruchungswerte besteht darin, dass diese mit Beanspruchungsgrenzwerten verglichen werden, die zugeordnet zu unterschiedlichen Fahrzeuggeschwindigkeiten in einem Grenzwertspeicher abgelegt sind.

Um dem Fahrer eine bestehende Überbelastung signalisieren zu können, kann eine optische und/oder akustische Auslösung eines Überlastungssignals vorgesehen sein. Es besteht aber auch die Möglichkeit, den Federungskomforts bei einer festgestellten Überbelastung so zu reduzieren, dass der Fahrer die auf das Fahrzeug einwirkenden Belastungen stärker empfinden kann, um daraufhin eine entsprechende Geschwindigkeitsreduzierung vorzunehmen.

Die Signalisierung einer bestehenden Überbelastung kann mit zunehmender Häufigkeit und/oder Stärke der Beanspruchung entsprechend verstärkt werden. Häufigkeit und Stärke der Beanspruchung kann unmittelbar aus den ermittelten Beanspruchungswerten abgeleitet werden. Es besteht aber auch die Möglichkeit, die Beanspruchungswerte in unterschiedliche Beanspruchungsklassen einzuordnen, denen wiederum mehr oder weniger starke Überlastungssignalisierungen zugeordnet sind.

Die Federwegsänderungen, die in zyklischen vorgegebenen Messzeiträumen von jeweils 0,01 sec bis 1,0 sec auftreten, können sehr vorteilhaft zur Bestimmung zugehöriger Beanspruchungswerte herangezogen werden. Dabei besteht die Möglichkeit, die Messzeiträume den jeweiligen Fahrbedingungen anzupassen, wobei beispielsweise beim Befahren verhältnismäßig guter Wegstrecken längere Messzeiträume gewählt werden können als beim Befahren schlechter Wegstrecken.

Für jeden gewählten Messzeitraum kann dann beispielsweise die darin enthaltene maximale Federwegsänderung direkt den Beanspruchungswert für diesen Messzeitraum darstellen. Grundsätzlich besteht aber auch die Möglichkeit, mehrere Extremwerte zur Bestimmung eines Beanspruchungswerts zu berücksichtigen, indem beispielsweise eine Mittelwertbildung der Extremwerte als Beanspruchungswert berücksichtigt wird.

Die Erfassung der Federwegsänderungen und der daraus abgeleiteten Beanspruchungswerte kann innerhalb veränderlicher Messzeiträume und mit einer veränderlichen zyklischen Messrate durchgeführt werden. Die Messzeiträume und die Messrate können somit den unterschiedlichen Betriebszuständen oder Anforderungen angepasst werden, um nicht unnötig hohe Datenmengen, bei beispielsweise sehr gutem Fahrbahnzustand, zu erfassen.

Der Erfindung liegt die weitere Aufgabe zugrunde, ein Kraftfahrzeug mit im Bereich der Fahrzeugräder angeordneten Federungssensoren bereitzustellen, bei dem die dynamische Beanspruchung des Kraftfahrzeugs bestimmt werden kann.

Die Lösung dieser Aufgabe gelingt mit den Merkmalen des Anspruchs 12. Besonders vorteilhafte Weiterbildungen des erfindungsgemäßen Kraftfahrzeugs sind Gegenstand der Unteransprüche 13 bis 15.

Gemäß Anspruch 12 umfasst das Kraftfahrzeug im Bereich der Fahrzeugräder angeordnete Federwegssensoren, die Federungssignale, welche auftretende Federwege repräsentieren, an eine Messelektronik übermitteln, wobei die Messelektronik so ausgebildet ist, dass innerhalb eines Messzeitraums gemessene dynamische Federwegsänderungen an eine Auswerteeinrichtung übermittelt werden, wobei zum jeweiligen Messzeitraum zugehörige Fahrzeuggeschwindigkeitswerte, die der Messelektronik von einer Fahrzeuggeschwindigkeitsmesseinrichtung übermittelt werden, ebenfalls der Auswerteeinrichtung übermittelt werden. Zudem ist die Auswerteeinrichtung so ausgebildet ist, dass diese anhand der innerhalb eines Messzeitraums gemessenen Federwegsänderungen und den zughörigen Fahrzeuggeschwindigkeitswerten die Beanspruchungswerte des Kraftfahrzeugs bestimmt. Erfindungsgemäß ist die Auswerteeinrichtung zum Abspeichern von gemessenen Federwegsänderungen und zeitgleichen Fahrzeuggeschwindigkeitswerten mit einem Datenspeicher verbunden, wobei als Federwegsänderungen die Differenz zeitlich benachbarter Maximalfederwege geteilt durch die Zeitdifferenz der zugehörigen Auftrittszeitpunkte ermittelbar sind, und wobei eine ermittelte Auftrittshäufigkeit von auftretenden Maximalfederwegen den festgestellten Federwegsänderungen in dem Datenspeicher zuordenbar ist.

Die dynamische Beanspruchung kann dabei beispielsweise dem Wert der in einem Messzeitraum aufgetretenen maximalen Federwegsänderung entsprechen. Als dynamische Beanspruchung kann aber auch die Summe der in einem Messzeitraum aufgetretenen Federwegsänderungen herangezogen werden. Welcher Wert als Maß für die dynamische Beanspruchung verwendet wird, kann je nach Anwendungsfall unterschiedlich festgelegt werden. Wesentlich ist aber, dass zugeordnet zu den festgestellten Federwegsänderungen zeitgleich vorliegende Fahrzeuggeschwindigkeitswerte berücksichtigt werden, da beispielsweise Stoßbelastungen im Bereich der Federung bei höheren Fahrzeuggeschwindigkeiten für das Kraftfahrzeug eine wesentlich höhere Beanspruchung darstellen als bei niedrigen Fahrzeuggeschwindigkeiten. Durch die Ermittlung der Federwegsänderungen in Kombination mit den zugehörigen Fahrzeuggeschwindigkeitswerten kann auf verhältnismäßig einfache Weise die auf ein Kraftfahrzeug einwirkende dynamische Beanspruchung während des Fahrbetriebs bestimmt und in dem Datenspeicher fortlaufend abgespeichert werden. Die abgespeicherten Daten können dann zu einem späteren Zeitpunkt, beispielsweise bei der Durchführung eines Kraftfahrzeugservices, ausgelesen werden.

Treten zu hohe dynamische Belastungen im Fahrbetrieb auf, ist es besonders vorteilhaft, wenn dies die Auswerteeinrichtung erkennt und daraufhin ein Überlastungssignal abgibt. Dieses Überlastungssignal kann ein akustisches und/oder optisches Warnsignal sein oder aber auch ein Steuersignal, welches an Federungseinrichtungen des Kraftfahrzeugs zur Steuerung des Federungskomforts übermittelt wird. Dabei dient das Überlastungssignal dazu, dass der Fahrer eine vorhandene zu hohe dynamische Beanspruchung erkennen und geeignete Gegenmaßnahmen ergreifen kann. Insbesondere kann der Fahrer bei einer festgestellten zu hohen dynamischen Beanspruchung die Fahrzeuggeschwindigkeit reduzieren.

Mit dem Überlastungssignal kann beispielsweise der Federungskomforts der Federung und/oder des Fahrersitzes und/oder die Federung des Führerhauses so beeinflusst werden, dass die auf das Fahrzeug einwirkende starke dynamische Beanspruchung für den Fahrer spürbar wird.

Die Erfindung wird nachfolgend anhand eines in der Zeichnung dargestellten Ausführungsbeispiels näher erläutert.

Es zeigen:
- Fig. 1: eine schematische Darstellung eines Kraftfahrzeugs mit Einrichtungen zur Ermittlung der dynamischen Beanspruchung im Fahrbetrieb und
- Fig. 2: eine Tabelle, in die Federwegsänderungen als Beanspruchungswerte in Abhängigkeit von unterschiedlichen Fahrzeuggeschwindigkeiten eintragbar sind.

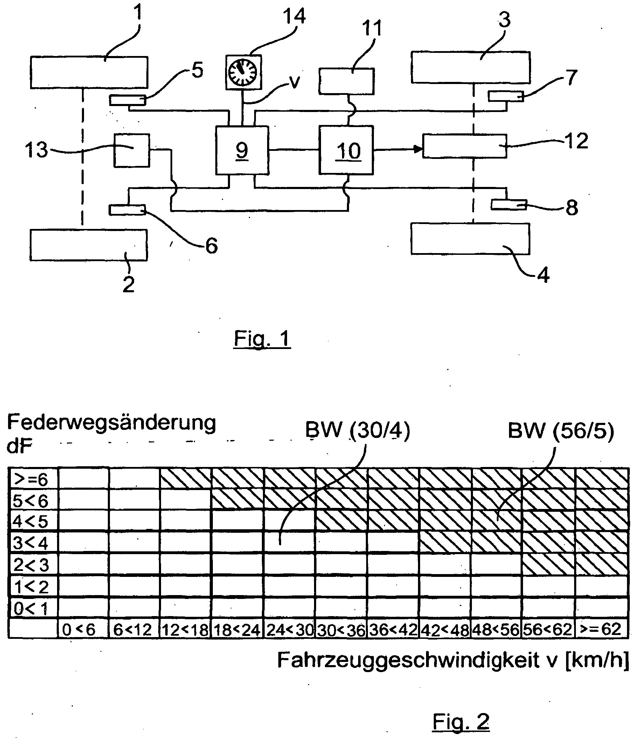

Die schematische Darstellung von Figur 1 zeigt insbesondere die einzelnen Komponenten, die zur Bestimmung der dynamischen Beanspruchung in einem Kraftfahrzeug vorgesehen sind. Im Bereich der Fahrzeugräder 1 bis 4 befinden sich Federwegsensoren 5 bis 8, die zur Messung der auftretenden Federwege bzw. Federwegsänderungen mit einer Messelektronik 9 verbunden sind. Die Messelektronik 9 ist ihrerseits mit einer Auswerteeinrichtung 10 verbunden, die zur Abspeicherung von Daten mit einem Datenspeicher 11 verbunden ist. Weiterhin ist die Auswerteeinrichtung 10 ausgangsseitig an eine Signalisierungseinrichtung 12 und an eine Federungseinrichtung 13 angeschlossen. Der Messelektronik 9 wird außer den Messsignalen von den Federwegsensoren 5 bis 8 auch ein Fahrzeuggeschwindigkeitssignal v von einer Fahrzeuggeschwindigkeitsmesseinrichtung 14 übermittelt, so dass die Messelektronik 9 in einem Messzeitraum festgestellte Federwegsänderungen dF mit zugehörigen Fahrzeuggeschwindigkeitswerten an die Auswerteeinrichtung 10 übermitteln kann.

In Figur 2 ist in einer Tabelle dargestellt, wie eine Datenaufzeichnung bzgl. der Federwegsänderungen dF und zugehöriger Fahrzeuggeschwindigkeitswerte vorgenommen werden kann. Die schraffiert dargestellten Tabellenfelder stellen dabei Beanspruchungsbereiche des Kraftfahrzeugs dar, die im Überlastungsbereich liegen und somit eine unzulässig hohe Beanspruchung des Kraftfahrzeugs kennzeichnen. Wird beispielsweise bei einer Fahrzeuggeschwindigkeit von 50 km/h in einem vorgegebenen Messzeitraum eine Federwegsänderung dF von 4,5 ermittelt, so ergibt dies einen Tabelleneintrag in das Feld (56/5), welches einen zu hohen Beanspruchungswert BW repräsentiert. Die Auswerteeinrichtung 10 von Figur 1 stellt dabei das Vorliegen einer zu hohen Beanspruchung fest und kann dies akustisch und/oder optisch an der Signalisierungseinrichtung 12 des Fahrers des Kraftfahrzeugs anzeigen. Außerdem kann die Auswerteeinrichtung 10, insbesondere wenn weiterhin zu hohe Beanspruchungen festgestellt werden, die Federungseinrichtung 13 in der Weise beeinflussen, dass sich der Fahrkomfort für den Fahrer deutlich verschlechtert. Die Federungseinrichtung 13 kann die Fahrersitzfederung und/oder die Federung des Führerhauses und/oder die Fahrzeugfederung sein.

Die Auslösung eines Überlastungssignals kann von der Auswerteeinrichtung 10 in Abhängigkeit von der Stärke einer festgestellten Überbeanspruchung erfolgen, wobei insbesondere die Häufigkeit auftretender Überbeanspruchung innerhalb eines Messzeitraums berücksichtigt werden können.

Ein Überbelastungssignal wird jedoch dann nicht abgegeben und es wird auch keine Beeinträchtigung des Federungskomforts von der Auswerteeinrichtung 10 veranlasst, wenn die Fahrzeuggeschwindigkeit und die zugehörig festgestellten Federwegsänderungen dF unterhalb vorgegebener Beanspruchungsgrenzen liegen. In Figur 2 liegen die weißen Tabellenfelder in dem Beanspruchungsbereich, der unterhalb einer vorgegebenen Überbeanspruchungsgrenze liegt. Dies bedeutet, dass beispielsweise bei einer Fahrzeuggeschwindigkeit von 25 km/h und einer zugehörig festgestellten Federwegsänderung dF von 3,5 sich ein Beanspruchungswert ergibt, der dem Tabellenfeld (30/4) entspricht. Dieses Tabellenfeld repräsentiert einen Beanspruchungswert BW, der unterhalb eines festgelegten Grenzbereichs liegt, so dass keine Überlastungssignalisierung oder sonstige Maßnahmen zur Reduzierung der Fahrzeuggeschwindigkeit ergriffen werden müssen.

Zur Erfassung von Beanspruchungen, die am Kraftfahrzeug auftreten, kann die Auswerteeinrichtung 10 von Figur 1 Federwegsänderungen innerhalb von Messzeiträumen von 0,01 Sekunden bis 1,0 Sekunden auswerten, jedoch können auch Federwegsmaxima und/oder die Summe von aufgetretenen Federwegsänderungen innerhalb eines Messzeitraums berücksichtigt werden.

Das in der Zeichnung dargestellte Ausführungsbeispiel stellt nur eine mögliche Ausführungsvariante dar. Wesentlich ist dabei immer, dass das von den Federwegsensoren 5 bis 8 (Figur 1) an die Messelektronik 9 übertragene Messsignal mit der jeweiligen Fahrzeuggeschwindigkeit verknüpft wird, um ein Maß bzw. einen Beanspruchungswert für das Kraftfahrzeug zu erhalten. Diese Beanspruchungswerte können in einem Datenspeicher 11 abgespeichert sein, der in unterschiedliche Speicherbereiche unterteilt sein kann, um beispielsweise einen Kurzzeitspeicher und einen Langzeitspeicher zu realisieren. Das Auslesen des Datenspeichers 11 kann beispielsweise bei Durchführung eines Services erfolgen, wobei dann auch Kurzzeitspeicher gegebenenfalls gelöscht werden können.

Die wesentlichen Einrichtungen, wie die Messelektronik 9, die Auswerteeinrichtung 10 und der Datenspeicher 11 können Teil einer zentralen Steuereinheit des jeweiligen Kraftfahrzeugs sein. Bei Luft gefederten Nutzfahrzeugen werden bekanntlich zur Erfassung der Federwege Federwegsensoren verwendet, die somit als Federwegsensoren 5 bis 8 im Sinne der vorliegenden Erfindung mit verwendet werden können.

## Patentansprüche

1. Verfahren zur Erfassung von an einem Kraftfahrzeug auftretenden Beanspruchungen, wobei im Fahrbetrieb innerhalb von Messzeiträumen auftretende dynamische Federwegsänderungen (dF) an der Fahrzeugfederung erfasst werden, wobei zudem zeitlich zugeordnete Fahrzeuggeschwindigkeitswerte (v) erfasst werden, und wobei die zeitgleich auftretenden Federwegsänderungen und Fahrzeuggeschwindigkeitswerte (v) zur Bestimmung von Beanspruchungswerten (BW) herangezogen werden, **dadurch gekennzeichnet, dass** als Federwegsänderungen (dF) die Differenz zeitlich benachbarter Maximalfederwege geteilt durch die Zeitdifferenz der zugehörigen Auftrittszeitpunkte ermittelt werden, und dass eine Auftrittshäufigkeit von auftretenden Maximalfederwegen ermittelt und den festgestellten Federwegsänderungen in einem Datenspeicher (11) zugeordnet wird.

2. Verfahren nach Anspruch 1, **dadurch gekennzeichnet, dass** die Beanspruchungswerte (BW) mit von der Fahrzeuggeschwindigkeit (v) abhängigen maximal zulässigen Beanspruchungsgrenzwerten verglichen werden, wobei bei einer festgestellten Grenzwertüberschreitung ein Überlastungssignal abgegeben wird.

3. Verfahren nach Anspruch 2, **dadurch gekennzeichnet, dass** das Überlastungssignal ein vom Fahrer des Kraftfahrzeugs wahrnehmbares Signal ist.

4. Verfahren nach einem der Ansprüche 2 oder 3, **dadurch gekennzeichnet, dass** mit dem Überlastungssignal eine Reduzierung des vom Fahrer wahrnehmbaren Federungskomforts erfolgt.

5. Verfahren nach einem der vorhergehenden Ansprüche, **dadurch gekennzeichnet, dass** mit zunehmender Häufigkeit und/oder Stärke der Belastung in einem Messzeitraum eine zunehmend stärkere Überlastungssignalisierung erfolgt.

6. Verfahren nach einem der vorhergehenden Ansprüche, **dadurch gekennzeichnet, dass** die Beanspruchungswerte (BW) in unterschiedliche Beanspruchungsklassen eingeordnet sind.

7. Verfahren nach einem der vorhergehenden Ansprüche, **dadurch gekennzeichnet, dass** die Federwegsänderungen (dF), die in zyklischen, vorgegebenen Messzeiträumen von jeweils 0,01 Sekunden bis 1,0 Sekunden auftreten, erfasst und zur Bestimmung zugehöriger Beanspruchungswerte (BW) ausgewertet werden.

8. Verfahren nach einem der vorhergehenden Ansprüche, **dadurch gekennzeichnet, dass** eine in einem Messzeitraum aufgetretene maximale Federwegsänderung (dF) direkt den Beanspruchungswert (BW) für diesen Messzeitraum darstellt.

9. Verfahren nach einem der vorhergehenden Ansprüche, **dadurch gekennzeichnet, dass** die Auftrittshäufigkeit von Federwegsänderungen (dF) und Werte der Federwegsänderungen (dF) und/oder daraus abgeleitete Beanspruchungswerte (BW) in unterschiedlichen Speicherbereichen des Datenspeichers (11) abgespeichert werden, und dass die Speicherbereiche einzeln lesbar und/oder löschbar und/oder überschreibbar sind.

10. Verfahren nach einem der vorhergehenden Ansprüche, **dadurch gekennzeichnet, dass** über die gesamte Betriebsdauer eines Kraftfahrzeugs die ermittelten Beanspruchungswerte (BW) zeitlich zugeordnet in dem auslesbare Datenspeicher (11) abgespeichert werden.

11. Verfahren nach einem der vorhergehenden Ansprüche, **dadurch gekennzeichnet, dass** die Erfassung der Federwegsänderungen (dF) innerhalb veränderlicher Messzeiträume und mit einer veränderlichen zyklischen Messrate durchgeführt wird.

12. Kraftfahrzeug mit im Bereich der Fahrzeugräder (1 bis 4) angeordneten Federwegssensoren (5 bis 8), die Federungssignale, welche auftretende Federwege repräsentieren, an eine Messelektronik (9) übermitteln, wobei die Messelektronik (9) so ausgebildet ist, dass innerhalb eines Messzeitraums gemessene dynamische Federwegsänderungen (dF) an eine Auswerteeinrichtung (10) übermittelt werden, wobei zum jeweiligen Messzeitraum zugehörige Fahrzeuggeschwindigkeitswerte (v), die der Messelektronik (9) von einer Fahrzeuggeschwindigkeitsmesseinrichtung (14) übermittelt werden, ebenfalls der Auswerteeinrichtung (10) übermittelt werden, und dass die Auswerteeinrichtung (10) so ausgebildet ist, dass diese anhand der innerhalb eines Messzeitraums gemessenen Federwegsänderungen (dF) und den zughörigen Fahrzeuggeschwindigkeitswerten (v) die Beanspruchungswerte (BW) des Kraftfahrzeugs bestimmt, **dadurch gekennzeichnet, dass** die Auswerteeinrichtung (10) zum Abspeichern von gemessenen Federwegsänderungen (dF) und zeitgleichen Fahrzeuggeschwindigkeitswerten (v) mit einem Datenspeicher (11) verbunden ist, wobei als Federwegsänderungen (dF) die Differenz zeitlich benachbarter Maximalfederwege geteilt durch die Zeitdifferenz der zugehörigen Auftrittszeitpunkte ermittelbar sind, und wobei eine ermittelte Auftrittshäufigkeit von auftretenden Maximalfederwegen den festgestellten Federwegsänderungen in dem Datenspeicher (11) zuordenbar ist.

13. Kraftfahrzeug nach Anspruch 12, **dadurch gekennzeichnet, dass** die Auswerteeinrichtung (10) bei einer festgestellten zu hohen dynamischer Beanspruchung des Kraftfahrzeugs ein Überlastungssignal an eine Signalisierungseinrichtung (12) und/oder an eine Federungseinrichtung (13) übermittelt.

14. Kraftfahrzeug nach Anspruch 13, **dadurch gekennzeichnet, dass** das Überlastungssignal den Federungskomfort in Wenigstens einer Federungseinrichtung (13) reduziert.

15. Kraftfahrzeug nach Anspruch 14, **dadurch gekennzeichnet, dass** die Federungseinrichtung (13) die Fahrzeugfederung und/oder die Federung des Fahrersitzes und/oder die Federung des Führerhauses umfasst.

## Claims

1. A method for recording stresses occurring on a motor vehicle, wherein dynamic spring travel changes (dF) which occur in the vehicle suspension system within measuring time periods in the driving mode are recorded, wherein in addition chronologically assigned vehicle velocity values (v) are recorded, and wherein the simultaneously occurring spring travel changes and vehicle velocity values (v) are used to determine stress values (BW), **characterized in that** the difference between chronologically adjacent maximum spring travel values divided by the difference between the associated times of occurrence are determined as spring travel changes (dF), and **in that** the frequency of occurrence of maximum spring travel values which occur is determined and is assigned to the detected spring travel changes in the data memory (11).

2. The method according to Claim 1, **characterized in that** the stress values (BW) are compared with maximum permissible stress limiting values which are dependent on the vehicle velocity (v), wherein an overload signal is given out when it is detected that the limiting value is exceeded.

3. The method according to Claim 2, **characterized in that** the overload signal is a signal which can be perceived by the driver of the motor vehicle.

4. The method as claimed in one of Claims 2 or 3, **characterized in that** a reduction in the suspension comfort which can be perceived by the driver takes place with the overload signal.

5. The method according to one of the preceding claims, **characterized in that** increasingly strong overload signalling takes place as the frequency and/or intensity of the loading increases in a measuring time period.

6. The method according to one of the preceding claims, **characterized in that** the stress values (BW) are assigned to different stress classes.

7. The method according tc one of the preceding claims, **characterized in that** the spring travel changes (dF) which occur in cyclic, predefined measuring time periods of, in each case, 0.01 seconds to 1.0 seconds, are detected and evaluated for the determination of associated stress values (BW).

8. The method according to one of the preceding claims, **characterized in that** a maximum spring travel change (dF) which has occurred in a measuring time period directly constitutes the stress value (BW) for this measuring time period.

9. The method according to one of the preceding claims, **characterized in that** the frequency of occurrence of spring travel changes (dF) and values of the spring travel changes (dF) and/or stress values (BW) derived therefrom are stored in different memory areas of the data memory (11), and **in that** the memory areas can be read and/or cleared and/or overwritten individually.

10. The method according to one of the preceding claims, **characterized in that** the determined stress values (BW) are stored, chronologically assigned, in the readable data memory (11) over the entire service life of a motor vehicle.

11. The method according to one of the preceding claims, **characterized in that** the spring travel changes (dF) are detected within variable measuring time periods and with a variable cyclical measuring rate.

12. A motor vehicle having spring travel sensors (5 to 8) which are arranged in the region of the vehicle wheels (1 to 4) and which transmit suspension signals, which represent spring travel values which occur, to measuring electronics (9), wherein the measuring electronics (9) are embodied in such a way that dynamic spring travel changes (dF) which are measured within a measuring time period are transmitted to an evaluation device (10), wherein the vehicle velocity values (v) which are associated with the respective measuring time period and which are transmitted to the measuring electronics (9) by a vehicle velocity measuring device (14) are also transmitted to the evaluation device (10), and in that the evaluation device (10) is embodied in such a way that it determines the stress values (BW) of the motor vehicle on the basis of the spring travel changes (dF) measured within a measuring time period, and the associated vehicle velocity values (v), **characterized in that** the evaluation device (10) is connected to a data memory (11) for the purpose of storing the measured spring travel changes (dF) and simultaneous vehicle velocity values (v), wherein the difference between chronologically adjacent maximum spring travel values divided by the difference between the associated times of occurrence can be determined as spring travel changes (dF), and wherein a determined frequency of occurrence of maximum spring travel values which occur can be assigned to the detected spring travel changes in the data memory (11).

13. The motor vehicle according to Claim 12, **characterized in that** when excessively high dynamic stressing of the motor vehicle is detected, the evaluation device (10) transmits an overload signal to a "signalling device (12) and/or to a suspension device (13).

14. The motor vehicle according to Claim 13, **characterized in that** the overload signal reduces the suspension comfort in at least one suspension device (13).

15. The motor vehicle according to Claim 14 **characterized in that** the suspension device (13) comprises the vehicle suspension and/or the suspension of the vehicle seat and/or the suspension of the driver's cab.

## Revendications

1. Procédé de détection de sollicitations survenant au niveau d'un véhicule automobile, sachant qu'en cas de fonctionnement en situation de conduite, des variations de course de ressort (dF) dynamiques survenant dans des périodes de mesure sont détectées au niveau de la suspension de véhicule, sachant que l'on détecte en outre des valeurs de vitesse du véhicule (v) associées dans le temps et qu'on en déduit les variations de course de ressort et les valeurs de vitesse du véhicule (v) survenant simultanément pour déterminer les valeurs de sollicitation (BW), **caractérisé en ce que** les variations de course de ressort (dF) déterminées sont la différence entre les courses de ressort maximales successives divisées par la différence de temps des moments de survenue associés et qu'une fréquence de survenue des courses de ressort maximales se produisant est déterminée et est associée aux variations de course de ressort détectées dans une mémoire de données (11).

2. Procédé selon la revendication 1, **caractérisé en ce que** les valeurs de sollicitation (BW) sont comparées aux valeurs limites de sollicitation maximales autorisées en fonction de la vitesse du véhicule (v), un signal de surcharge étant envoyé en cas de dépassement de valeur limite détecté.

3. Procédé selon la revendication 2, **caractérisé en ce que** le signal de surcharge est un signal perceptible par le conducteur du véhicule automobile.

4. Procédé selon l'une quelconque des revendications 2 ou 3, **caractérisé en ce qu'**une réduction du confort de suspension perceptible par le conducteur se produit avec le signal de surcharge.

5. Procédé selon l'une quelconque des revendications précédentes, **caractérisé en ce qu'**un signalement de surcharge de plus en plus fort se produit en cas de fréquence et/ou d'intensité accrues de la charge pendant une période de mesure.

6. Procédé selon l'une quelconque des revendications précédentes, **caractérisé en ce que** les valeurs de sollicitation (BW) sont classées selon différentes classes de sollicitation.

7. Procédé selon l'une quelconque des revendications précédentes, **caractérisé en ce que** l'on détecte les variations de course de ressort (dF) survenant pendant des périodes de mesure prédéfinies cycliques de respectivement 0,01 seconde à 1,0 seconde, et qu'on les analyse pour déterminer les valeurs de sollicitation (BW) associées.

8. Procédé selon l'une quelconque des revendications précédentes, **caractérisé en ce qu'**une variation de course de ressort (dF) maximale survenant pendant une période de mesure représente directement la valeur de sollicitation (BW) pour cette période de mesure.

9. Procédé selon l'une quelconque des revendications précédentes, **caractérisé en ce que** la fréquence de survenue des variations de course de ressort (dF) et les valeurs des variations de course de ressort (dF) et/ou les valeurs de sollicitation (BW) en découlant sont mémorisées dans différentes zones de mémoire de la mémoire de données (11) et que les zones de mémoire peuvent être lues, effacées et/ou réécrites individuellement.

10. Procédé selon l'une quelconque des revendications précédentes, **caractérisé en ce que** les valeurs de sollicitation (BW) déterminées pendant toute la durée de fonctionnement d'un véhicule automobile sont mémorisées dans la mémoire de données (11) lisible de façon à pouvoir présenter une association dans le temps.

11. Procédé selon l'une quelconque des revendications précédentes, **caractérisé en ce que** la détection des variations de course de ressort (dF) est réalisée pendant des périodes de mesure variables et avec une vitesse de mesure cyclique variable.

12. Véhicule automobile avec des capteurs de course de ressort (5 à 8) disposés dans la zone des roues de véhicule (1 à 4) transmettant les signaux de suspension représentant la course de ressort survenue à un système électronique de mesure (9), le système électronique de mesure (9) étant réalisé de telle sorte que les variations de course de ressort (dF) dynamiques mesurées à l'intérieur d'une période de mesure sont transmises à un dispositif d'analyse (10), les valeurs de vitesse du véhicule (v) associées à la période de mesure respective transmises au système électronique de mesure (9) à partir d'un dispositif de mesure de vitesse de véhicule (14) sont également transmises au dispositif d'analyse (10) et que le dispositif d'analyse (10) est réalisé de telle sorte que ledit dispositif d'analyse détermine, à l'aide des variations de course de ressort (dF) mesurées pendant une période de mesure et des valeurs de vitesse du véhicule (v) associées, les valeurs de sollicitation (BW) du véhicule automobile, **caractérisé en ce que** le dispositif d'analyse (10) est relié à une mémoire de données (11) pour mémoriser les variations de course de ressort (dF) mesurées et les valeurs de vitesse du véhicule (v) simultanées, les variations de course de ressort (dF) déterminées étant la différence des courses de ressort maximales successives divisée par la différence de temps des moments de survenue associés et une fréquence de survenue déterminée des courses de ressort maximales survenant pouvant être associée aux variations de course de ressort détectées dans la mémoire de données (11).

13. Véhicule automobile selon la revendication 12, **caractérisé en ce que** le dispositif d'analyse (10) transmet un signal de surcharge à un dispositif de signalement (12) et/ou à un dispositif de suspension (13) en cas de sollicitation dynamique trop élevée du véhicule automobile.

14. Véhicule automobile selon la revendication 13, **caractérisé en ce que** le signal de surcharge réduit le confort de suspension dans au moins un dispositif de suspension (13).

15. Véhicule automobile selon la revendication 14, **caractérisé en ce que** le dispositif de suspension (13) comprend la suspension du véhicule et/ou la suspension du siège de conducteur et/ou la suspension de la cabine du conducteur.
